# EUROPEAN PATENT SPECIFICATION

(11) **EP 4 347 711 B1**
(45) Date of publication and mention of the grant of the patent: **09.09.2026**
(21) Application number: 22735225.9
(22) Date of filing: 01.06.2022
(51) Int. Cl.: C08L 33/20, C08L 69/00

(54) **POLYMERIC COMPOSITION AND PRODUCT COMPRISING THE POLYMERIC COMPOSITION**
POLYMERZUSAMMENSETZUNG UND PRODUKT, DAS DIE POLYMERZUSAMMENSETZUNG UMFASST
COMPOSITION POLYMÈRE ET PRODUIT COMPRENANT LA COMPOSITION POLYMÈRE

(30) Priority: 01.06.2021 IT 202100014348
(43) Date of publication of application: 10.04.2024
(73) Proprietor: MAIP S.r.l., 10128 Torino (IT)
(72) Inventor: MARTINI, Eligio, 10036 Settimo Torinese (TO) (IT)
(74) Representative: Studio Torta S.p.A.
(86) International application number: PCT/IB2022/055110
(87) International publication number: WO 2022/254348

(56) References cited:
- JP-A- 2013 043 908
- MC KEE G E ET AL: "Synthesis, Properties and Applications of Acrylonitrile-Styrene-Acrylate Polymers", MODERN STYRENIC POLYMERS: POLYSTYRENES AND STYRENIC COPOLYMERS, 21 December 2003 (2003-12-21), pages 341 - 362, XP093255916, ISBN: 978-0-471-49752-3, Retrieved from the Internet <URL:https://onlinelibrary.wiley.com/doi/pdf/10.1002/0470867213#page=363> [retrieved on 20250304]

## Description

### Cross-Reference to Related Applications

This Patent Application claims priority from Italian Patent Application No. 102021000014348 filed on June 1, 2021.

### Technical Field of the Invention

The present invention concerns a polymeric composition and the product comprising the polymeric composition.

### State of the Art

The study of polymeric compositions that can pass increasingly stringent tests, in particular in the vehicle sector or to obtain special aesthetic effects, is ongoing.

In particular, in the vehicle sector the materials currently used in numerous parts of motor vehicle interiors require surface coating after-treatments and these treatments entail high economic and environmental costs in order to overcome the stringent scratch and abrasion tests.

A typical example is the search by motor vehicle manufacturers to find a polymeric material and, in particular, a thermoplastic material that complies with the specifications established by the vehicle manufacturers for use in interiors.

In particular, it is important to be able to obtain products that have a dark "Piano Black" colour.

A further general requirement is that the material does not need coating so as to combine a saving in costs with an improved environmental sustainability resulting from the elimination of the VOC.

The technical requirements for these materials are numerous. For example, the materials must be scratch-resistant and pass the scratch resistance tests (Erichsen Test), have mar resistance (Erichsen Test), and pass the fabric abrasion tests (Taber test) .

The search is also ongoing for materials for motor vehicle exteriors that can pass the UV tests for interiors according to the SAE J2412 standard and for exteriors according to the SAE J2527 standard.

Clearly the materials must also have good mechanical properties such as, for example, an elastic modulus around 2000 Mpa, be able to resist impacts greater than 20 Kj/m2, and have an ultimate elongation > 25%. The materials must also have good thermal resistance properties: HDT > 100°C, Vicat at 5 kg > 110°C. Lastly, the materials must also have a high chemical resistance and, in particular, resistance to detergents, sun creams and various potentially corrosive liquids.

It is known to use polymer mixtures for these purposes such as the combination of styrene resins, for example AES (acrylonitrile ethylene styrene) or ASA (acrylonitrile styrene acrylate), with acrylic resins such as, for example, MMA (methyl methacrylate) in various degrees and with various performances in order to exploit the various characteristics of the single polymers. Various additives can be added to the various polymers to confer specific properties, such as, for example, siloxane polymers to improve scratch resistance.

These combinations of styrene resins with acrylic resins often have a limited thermal resistance due to the styrene portion and can often have a limited impact resistance due to the acrylic portion and poor processability as the material has poor fluidity.

The limited thermal resistance prevents use in various applications in vehicle interiors where, for example, high temperatures can be reached behind the windscreen which distort the material. Similarly the limited impact resistance prevents use in positions in contact with persons, especially in head impact and knee impact positions. Lastly, the poor fluidity of the material prevents use in particular with fine thicknesses or where long runs are necessary such as, for example, front grilles, spoilers and bumper components.

The search is therefore ongoing for new compositions of polymeric materials provided with a multiplicity of characteristics that allow use in various components, in particular of vehicles.

JP2013043908 discloses a polycarbonate resin composition containing 61-99 mass% of an aromatic polycarbonate resin (A) and 39-1 mass% of a polyester resin (B), wherein the total of (A) and (B) is 100 mass%. The aromatic polycarbonate resin composition contains based on total 100 pts.mass of the (A) and (B): 1-30 pts.mass of a graft copolymer (C) obtained by performing graft copolymerization of an aromatic vinyl-based monomer (c1), a vinyl cyanide monomer (c2), a methyl methacrylate monomer (c3), and a monomer selected from other copolymerizable monomers (c4), wherein (c1), (c2), and (c3) are essential components; 1-20 pts.mass of an acrylonitrile-ethylene propylene-styrene-based copolymer (D); and 10-60 pts.mass of a polymethylmethacrylate-based (co)polymer (E) having pencil hardness higher than F.

### Subject and Summary of the Invention

The object of the invention is a polymeric composition able to solve the problems described above and which, in particular, simultaneously provides:
- a high thermal resistance, preferably Vicat>115°C,
- a high impact resistance, preferably Izod>22KJ7m² and
- a high processability, preferably MFR >= 8.

A further object of the present invention is to obtain a polymeric composition that is able to pass the SAE J 2527 test for exteriors and the SAE J 2412 test for interiors, with regard to the variation in the black color, which must be below a limit of Delta E < 3 and pass other UV tests described in the car manufacturers' specifications. Furthermore the loss of gloss with respect to the initial value must be limited, with retention of 25% or 50% according to the surface finish of the component.

A further object of the present invention is to obtain a product, in particular for use in vehicles, that maintains the characteristics of the polymeric composition and which can be easily formed.

These objects are achieved by the present invention, relative to a polymeric composition according to claim 1 and to a product according to claim 10.

### Brief Description of the Drawings

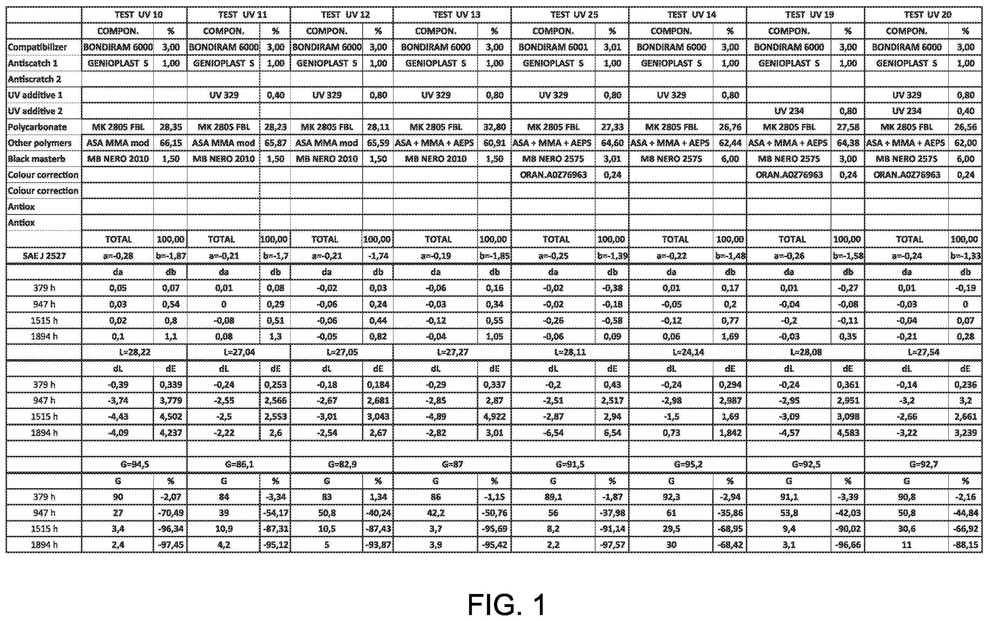

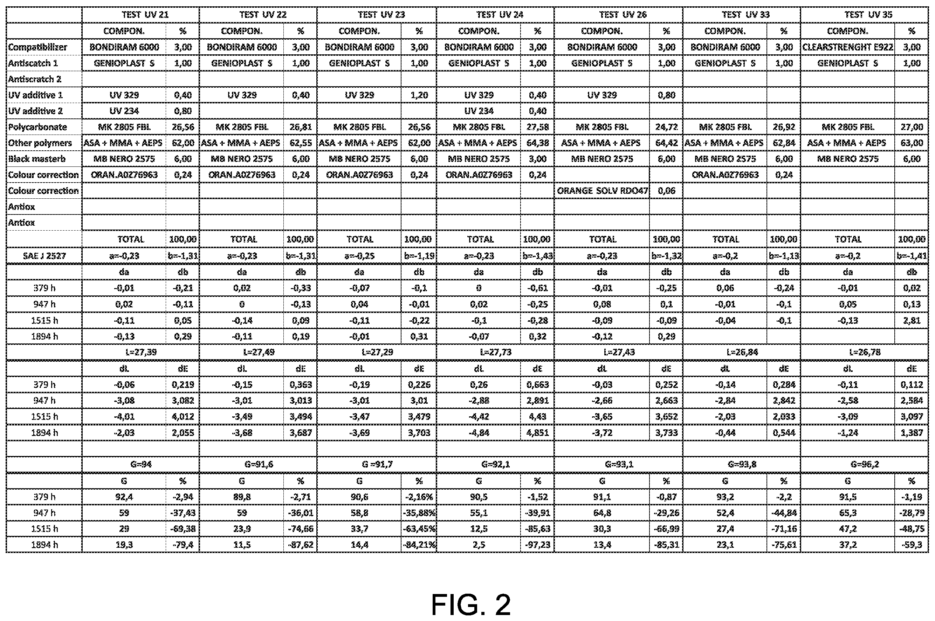

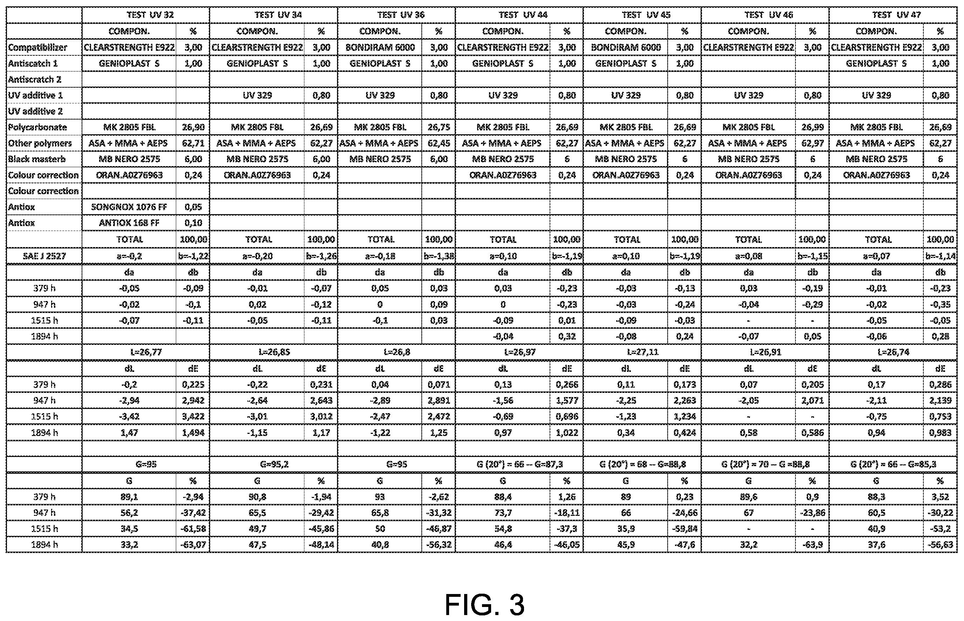

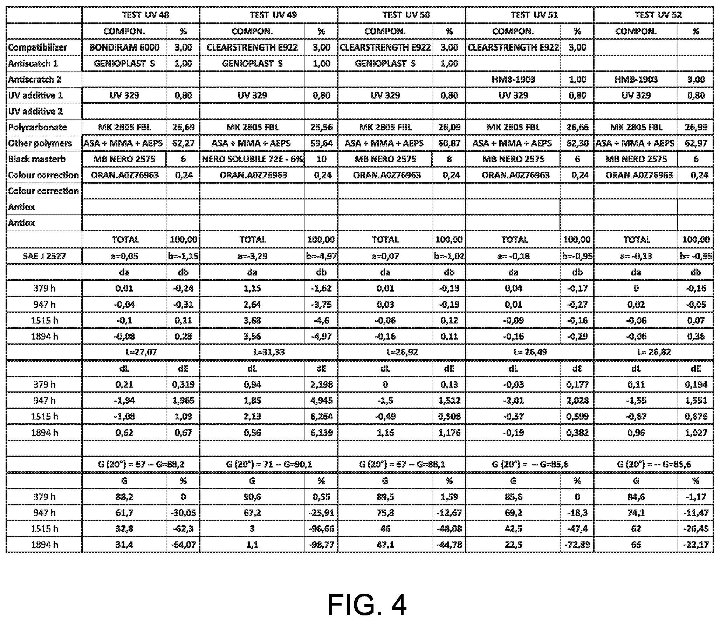

- Figures 1 to 4 show a table 1 with a series of polymeric compositions and the results of UV and gloss tests performed on the polymeric compositions.

### Detailed Description of Preferred Embodiments of the Invention

In the context of the present invention, by polymeric material we mean a polymer-based material, these polymers can be derived from a single monomer or copolymers or mixtures of several polymers also having different characteristics.

In the context of the present invention, by polymeric composition we mean a composition comprising at least two polymers and possibly other additives such as, for example, antioxidants or fillers such as, for example, fibers.

The abbreviated names of the polymers in compliance with the official IUPAC nomenclature, for example according to the DIN EN ISO 1043-1, DIN ISO 1629 and DIN ISO 2076 standards, will often be used below.

According to the invention, the polymeric composition comprises:
a) acrylonitrile ethylene propylene styrene (AEPS), preferably 2-propenenitrile, with ethene, ethenylbenzene,5 ethylidene bicyclo (2.2.1) hept-2-ene and 1-propene having CAS number 32069-92-4 or acrylonitrile ethylene propylene diene styrene (AEPDS),
b) acrylonitrile styrene acrylate (ASA) 2-propenoic acid, butyl ester, polymer with ethenylbenzene and 2-propenenitrile, CAS number 26299-47-8,
c) methyl methacrylate alkyl acrylate resin preferably 2-propenoic acid, e-methyl, methyl ester, polymer 2-propene, CAS number 9011-87-4,
d) polycarbonate (PC) with CAS No. 25037-45-0.

Preferably the composition further comprises also dimethylpolysiloxane, CAS number 63148-62-9.

Preferably the AEPS or AEPDS is present in an amount by weight between 0 and 20% by weight, more preferably between 1 and 20% by weight, more preferably less than 15% by weight, even more preferably between 3 and 6% by weight.

Preferably the acrylonitrile styrene acrylate (ASA) is present in an amount by weight between 1 and 40% by weight, more preferably between 5 and 25% by weight, even more preferably between 20 and 25% by weight.

Preferably the methyl methacrylate alkyl acrylate (PMMA) is present in an amount by weight between 1 and 60% wt, more preferably between 20 and 50% wt, even more preferably between 20 and 30% by weight.

Preferably the polycarbonate (PC) is present in an amount by weight between 10 and 60%, more preferably between 15 and 50% wt, even more preferably between 25 and 35% wt.

Optionally it is also possible to use a heat-resistant acrylic resin, more preferably present in a percentage higher than 10% by weight, even more preferably higher than 25% by weight.

Preferably the polycarbonate (PC) can have, in certain applications such as grilles, a high fluidity (MFR>20 g/10 min).

Preferably a UV absorber is added in combination with one or more particular fillers, for example carbon black.

Preferably the polymeric composition also comprises a compatibilizer. The compatibilizer is preferably selected from the group consisting of a substance selected from the group consisting of ABS modified with maleic anhydride, homopolymer polypropylene modified with maleic anhydride, low density linear polyethylene modified with maleic anhydride, maleic styrene-anhydride (SMA), styrene-acrylonitrile-glycidyl methacrylate (SAG), amine-functional styrene-acrylonitrile, terpolymer of ethylene-methyl acrylate-glycidyl methacrylate, styrene-ethylene/butylene-styrene grafted with maleic anhydride (SEBS-g-MAH), acrylonitrile-ethylene-propylene-styrene polymer, polymer of acrylonitrile-styrene-methacrylic acid, copolymer methyl methacrylate-butadiene-styrene (MBS), or acrylonitrile-butadiene-styrene grafted with maleic anhydride, methacrylate butadiene styrene or mixtures thereof.

Preferably the compatibilizer is present in an amount by weight between 0.2 and 20% wt, more preferably between 0.5 and 10% wt, even more preferably between 2 and 6% wt.

Preferably the polymeric composition also comprises a plurality of UV stabilizers, both for the styrenic resins and for the polycarbonate.

The UV stabilizers ensure compliance with the UV standards in terms of acceptable color and gloss variation for car manufacturers.

In fact, selecting a single suitable stabilizer is problematic since the polymeric composition contains numerous polymers and the stabilizer does not act in the same way on all of them. Furthermore the stabilizer interferes also with further possible pigments present in the polymeric composition and on any additives.

For this reason UV absorbers, generally benzotriazoles, and in particular hydroxyphenylbenzotriazoles with excellent spectrum coverage in the UV region, for example the UV329 or the UV 234, are preferably used for UV stabilization of the polycarbonate.

Preferably the UV stabilizer is present in an amount by weight between 0.1 and 5% wt, more preferably between 0.1 and 2% wt, even more preferably between 0.1 and 0.9% wt.

Optionally other compounds are also present in the polymeric composition in addition to the most common additives such as, for example, dyes or pigments, preferably present in an amount by weight between 0 and 10% wt. The presence of a specific UV absorber combined with the presence of different types of carbon black are advantageous elements for finding the correct formulation to ensure compliance with the car manufacturer UV standards. Therefore in the various tests, different carbon blacks were selected, passing through different degrees with different form ratios, in combination with various benzotriazoles. Furthermore, due to its extension, the chemical groups present on the surface of the carbon black, generated in preparation of the carbon black depending on the source of the carbon and the process (such as, for example, the OH groups), can be decisive for the properties of the material. Therefore, given the same surface area, materials with different chemical surface structure can be tested.

The percentage of carbon black varies according to the color to be produced and the UV protection requirement. In general it varies from 0.1% to 4% by weight, more preferably between 0.8 and 2%.

In particular, it is particularly advantageous to add additives such as siloxanes, preferably dimethylsiloxane also called dimethylpolysiloxane, even more preferably dimethylpolysiloxane with very high molecular weight. Optionally the dimethylpolysiloxane can be mixed with silica, as in the material marketed under the name Genioplast.

By appropriately combining the polymers of the polymeric composition, in particular by adding them in the quantities indicated above, it is possible to obtain a polymeric composition having characteristics that overcome the problems described above and is therefore suitable for use also in motor vehicle interiors, for example to produce portions of motor vehicles, in particular black in color, with a high thermal resistance Vicat > 115°C, a high impact resistance with Izod > 22 KJ7 m² and simultaneously maintain high processability with MFR at least equal to 8.

Compliance with the SAE J 2527 standard is furthermore ensured, having a Delta E limit < 3 and a gloss retention of 25 or 50% according to the texture of the component.

The polymeric composition according to the present invention allows to solve the above-mentioned problems and, in particular, is at the same time easily processable and has good mechanical characteristics and resistance to chemical aggression, enabling it to pass all the tests necessary to produce motor vehicle interiors and is therefore suitable for use in products for motor vehicle parts. Furthermore, the particular mixture of polymers used to form the polymeric composition allows a synergic effect to be obtained with respect to use of the single polymeric components of the composition.

The two-component composition will be described below also by means of examples, without limiting the invention to these examples.

### Examples 1-28

28 formulations of polymeric compositions were prepared and tested to verify UV behavior and gloss so as to verify the effects of the combination of polymers.

Table 1 of Figures 1 to 4 therefore shows various formulations and the relative results of the UV and gloss tests.

The tests are performed to verify compliance with the stringent SAE J 2527 standard for exteriors.

The table shows the results obtained after Xenon irradiation at various time intervals.

The final interval of 1894 hours corresponds to the 2500 KJ/m2 of the SAE standard. The values of the single colorimetric coordinates a, b, L and the overall one ΔE were therefore obtained by following the formula: $ΔE = √ \left({ΔL}^{2}+{Δa}^{2}+{Δb}^{2}\right)$

Table 1 also shows the value obtained from the gloss test after the same number of hours.

Table 1 therefore shows that many polymeric compositions according to the invention obtain excellent values in the UV and gloss tests.

For the polymers used, the following correspondences apply: BONDIRAM 6000: acrylonitrile-butadiene-styrene grafted with maleic anhydride
GENIOPLAST S: silicone
HMB-1903: silicone
UV 329: 2-(2H-benzotriazol-2-yl)-4-(1,1,3,3-tetramethylbutyl) phenol, 2-(2-hydroxy-5-t-octylphenyl) benzotriazole
UV234: 2-(2-hydroxy-3,5-di(1,1-dimethyl-benzyl)-2-benzotriazole, 2-(2H-benzotriazol-2-yl)-4,6-bis(1-methyl-1-phenylethyl)phenol
MK2805 FBL: polycarbonate
MB NERO 2010: carbon black
ARAN.A0Z276963: dye
HMB 1903: silicone
ASA MMA mod. or ASA MMA AEPS: a mixture of acrylonitrile ethylene propylene styrene (AEPS), CAS 32069-92-4 with acrylonitrile styrene acrylate (ASA) CAS 26299-47-8 and methyl methacrylate alkyl acrylate (PMMA) CAS 9011-87-4.

## Claims

1. Polymeric composition comprising:
a) acrylonitrile ethylene propylene styrene (AEPS),
b) Acrylonitrile Styrene Acrylate (ASA) with CAS number 26299-47-8,
c) methyl methacrylate alkyl acrylate resin,
d) polycarbonate (PC) with CAS No. 25037-45-0.

2. A polymeric composition according to claim 1, **characterized in that** it comprises dimethylpolysiloxane.

3. Polymeric composition according to claim 1 or 2, **characterized in that** said acrylonitrile ethylene propylene styrene (AEPS) or acrylonitrile ethylene propylene diene styrene (AEPDS) is present in an amount by weight between 1 and 20 %.

4. A polymeric composition according to any one of the preceding claims, **characterized in that** the ASA polymer with CAS No. 26299-47-8 is present in an amount by weight of between 1 and 30 %.

5. Polymeric composition according to any one of the preceding claims, **characterized in that** methyl methacrylate alkyl acrylate resin is present in an amount by weight of between 1 and 40 %.

6. Polymeric composition according to any one of the preceding claims, **characterized in that** polycarbonate (PC) is present in an amount by weight of between 10 and 60 %.

7. Polymeric composition according to any one of the preceding claims, **characterized in that** it comprises a compatibilizer selected from the group consisting of acrylonitrile-butadiene-styrene grafted with maleic anhydride, methacrylate butadiene styrene.

8. A polymeric composition according to any one of the preceding claims, **characterized by** the fact that said compatibilizer is present in an amount by weight between 0.2 and 20%.

9. Polymeric composition according to any one of the preceding claims, **characterized in that** it comprises a UV stabilizer chosen from the group consisting of benzotriazoles.

10. Polymeric composition according to any one of the preceding claims, **characterized in that** said UV stabilizer is present in an amount by weight between 0.1 and 5 %.

11. Polymeric composition according to any one of the preceding claims, **characterized in that** said polycarbonate has a fluidity MFR>20g/10 min.

12. A product comprising a polymeric composition according to any one of claims 1 to 11.

## Patentansprüche

1. Polymere Zusammensetzung, umfassend:
a) Acrylnitril-Ethylen-Propylen-Styrol (AEPS),
b) Acrylnitril-Styrol-Acrylat (ASA) mit der CAS-Nummer 26299-47-8,
c) Methylmethacrylat-Alkylacrylat-Harz
d) Polycarbonat (PC) mit der CAS-Nummer 25037-45-0.

2. Polymere Zusammensetzung nach Anspruch 1, **dadurch gekennzeichnet, dass** sie Dimethylpolysiloxan umfasst.

3. Polymere Zusammensetzung nach Anspruch 1 oder 2, **dadurch gekennzeichnet, dass** das Acrylnitril-Ethylen-Propylen-Styrol (AEPS) oder Acrylnitril-Ethylen-Propylen-Dien-Styrol (AEPDS) in einer Gewichtsmenge zwischen 1 und 20 % vorhanden ist.

4. Polymere Zusammensetzung nach einem der vorstehenden Ansprüche, **dadurch gekennzeichnet, dass** das ASA-Polymer mit der CAS-Nummer 26299-47-8 in einer Gewichtsmenge zwischen 1 und 30 % vorhanden ist.

5. Polymere Zusammensetzung nach einem der vorstehenden Ansprüche, **dadurch gekennzeichnet, dass** Methylmethacrylat-Alkylacrylat-Harz in einer Gewichtsmenge zwischen 1 und 40 % vorhanden ist.

6. Polymere Zusammensetzung nach einem der vorstehenden Ansprüche, **dadurch gekennzeichnet, dass** Polycarbonat (PC) in einer Gewichtsmenge zwischen 10 und 60 % vorhanden ist.

7. Polymere Zusammensetzung nach einem der vorstehenden Ansprüche, **dadurch gekennzeichnet, dass** sie ein Kompatibilisierungsmittel umfasst, ausgewählt aus der Gruppe bestehend aus Acrylnitril-Butadien-Styrol, gepfropft mit Maleinsäureanhydrid, Methacrylat-Butadien-Styrol.

8. Polymere Zusammensetzung nach einem der vorstehenden Ansprüche, **dadurch gekennzeichnet, dass** das Kompatibilisierungsmittel in einer Gewichtsmenge zwischen 0,2 und 20 % vorhanden ist.

9. Polymere Zusammensetzung nach einem der vorstehenden Ansprüche, **dadurch gekennzeichnet, dass** sie ein UV-Stabilisierungsmittel, ausgewählt aus der Gruppe der Benzotriazole, umfasst.

10. Polymere Zusammensetzung nach einem der vorstehenden Ansprüche, **dadurch gekennzeichnet, dass** das UV-Stabilisierungsmittel in einer Gewichtsmenge zwischen 0,1 und 5 % vorhanden ist.

11. Polymere Zusammensetzung nach einem der vorstehenden Ansprüche, **dadurch gekennzeichnet, dass** das Polycarbonat eine Fließfähigkeit MFR>20g/10 min aufweist.

12. Produkt, umfassend eine polymere Zusammensetzung nach einem der Ansprüche 1 bis 11.

## Revendications

1. Composition polymère comprenant :
a) l'acrylonitrile éthylène propylène styrène (AEPS),
b) l'acrylonitrile styrène acrylate (ASA) dont le numéro CAS est 26299-47-8,
c) la résine de méthacrylate de méthyle et d'acrylate d'alkyle
d) le polycarbonate (PC) dont le numéro CAS est 25037-45-0.

2. Composition polymère selon la revendication 1, **caractérisée en ce qu'**elle comprend du diméthylpolysiloxane.

3. Composition polymère selon la revendication 1 ou 2, **caractérisée en ce que** ledit acrylonitrile éthylène propylène styrène (AEPS) ou l'acrylonitrile éthylène propylène diène styrène (AEPDS) est présent dans une quantité en poids comprise entre 1 et 20 %.

4. Composition polymère selon l'une quelconque des revendications précédentes, **caractérisée en ce que** le polymère ASA dont le numéro CAS est 26299-47-8 est présent en une quantité en poids comprise entre 1 et 30 %.

5. Composition polymère selon l'une quelconque des revendications précédentes, **caractérisée en ce que** la résine méthacrylate de méthyle acrylate d'alkyle est présente en une quantité en poids comprise entre 1 et 40 %.

6. Composition polymère selon l'une quelconque des revendications précédentes, **caractérisée en ce que** le polycarbonate (PC) est présent dans une quantité en poids comprise entre 10 et 60 %.

7. Composition polymère selon l'une quelconque des revendications précédentes, **caractérisée en ce qu'**elle comprend un agent de compatibilité choisi dans le groupe constitué par l'acrylonitrile-butadiène-styrène greffé à l'anhydride maléique, le méthacrylate-butadiène-styrène.

8. Composition polymère selon l'une quelconque des revendications précédentes, **caractérisée en ce que** ledit agent de compatibilité est présent en une quantité en poids comprise entre 0,2 et 20 %.

9. Composition polymère selon l'une quelconque des revendications précédentes, **caractérisée en ce qu'**elle comprend un stabilisateur UV choisi dans le groupe constitué par les benzotriazoles.

10. Composition polymère selon l'une quelconque des revendications précédentes, **caractérisée en ce que** ledit stabilisateur UV est présent dans une quantité en poids comprise entre 0,1 et 5 %.

11. Composition polymère selon l'une quelconque des revendications précédentes, **caractérisée en ce que** ledit polycarbonate a une fluidité MFR>20g/10 min.

12. Produit comprenant une composition polymère selon l'une quelconque des revendications 1 à 11.
